**Europäisches Patentamt**

**European Patent Office**

**Office européen des brevets**

(11) Veröffentlichungsnummer: **0 106 208**
**A2**

## (12) EUROPÄISCHE PATENTANMELDUNG

(21) Anmeldenummer: **83109440.4**

(22) Anmeldetag: **22.09.83**

(51) Int. Cl.³: **B 29 D 27/00**

(30) Priorität: **14.10.82 DE 3238090**

(43) Veröffentlichungstag der Anmeldung:
**25.04.84 Patentblatt 84/17**

(84) Benannte Vertragsstaaten:
**AT CH DE FR GB IT LI NL SE**

(71) Anmelder: **Battenfeld Maschinenfabriken GmbH**
**Scherl 10 Postfach 1164/1165**
**D-5882 Meinerzhagen 1(DE)**

(72) Erfinder: **Fillmann, Werner**
**Schillerstrasse 13**
**D-5912 Hilchenbach 4 (Dahlbruch)(DE)**

(74) Vertreter: **Hemmerich, Friedrich Werner et al,**
**Patentanwälte F.W. Hemmerich Gerd Müller, Dipl.-Ing. D.**
**Grosse Felix Pollmeier Hammerstrasse 2**
**D-5900 Siegen 1(DE)**

(54) **Formkörper aus Kunststoff.**

(57) Ein Formkörper aus Kunststoff mit einem von einer kompakten Außenhaut aus treibmittelfreiem Kunststoff umschlossenen Kern soll mit einer Abschirmung gegen elektrische bzw. magnetische Felder versehen werden. Dazu wird vorgeschlagen, daß zumindest eine dünne, an die Außenhaut angrenzende Schicht des Kerns zumindest teilweise aus elektrisch leitendem Füllstoff gebildet wird.

Fig. 1

EP 0 106 208 A2

13. Oktober 1982          ko.th                    61 042

Battenfeld Maschinenfabriken GmbH, 5882 Meinerzhagen


Formkörper aus Kunststoff


Die Erfindung bezieht sich auf einen Formkörper aus Kunststoff mit einem
von einer kompakten Außenhaut aus treibmittelfreiem Kunststoff umschlossenene Kern sowie auf ein Verfahren zu seiner Herstellung.

Es sind Formkörper aus Kunststoff bekannt, die auf einer meist vollkommen
geschlossenen Außenhaut aus treibmittelfreiem Kunststoff und aus einem
porigen Kern aus treibmittelhaltigem Kunststoff bestehen. Dabei erfolgt
die Herstellung eines solchen Formkörpers in einem Arbeitsgang, indem
über einen mit zwei Spritzeinheiten für die unterschiedlichen Kunststoffe
verbundenen Spritzkopf nacheinander treibmittelfreier und treibmittelhaltiger
Kunststoff in den Innenraum einer Form eingespritzt werden. In Abhängigkeit
von der Form und Größe des herzustellenden Formkörpers ist es möglich, die
beiden unterschiedlichen Kunststoffe während einer kontinuierlichen Übergangsphase gleichzeitig einzuspritzen und nach der Beendigung der Einspritzphase für den treibmittelhaltigen Kunststoff noch eine vorbestimmte Menge
kompakten, also treibmittelfreien Kunststoffs nachzuspritzen.

Wird nun ein solcher Formkörper als Gehäuse für ein elektronisches Gerät,
beispielsweise eine Büromaschine, verwendet, ist es notwendig, daß der
Formkörper eine elektronische Abschirmung bzw. einen induktiven Schutz
besitzt. Um diesen zu erreichen, wird auf die Innenseite des Formkörpers
entweder eine Metallfolie aufgeklebt oder eine besondere, dünne Schicht
aus Metallpulver aufgespritzt. Dieser Aufspritzvorgang erhöht den Herstellungsaufwand des Formkörpers und birgt die Gefahr in sich, daß dabei Spritzer
des Metallpulvers auf die Sichtfläche der Außenhaut aus treibmittelfreiem Kunststoff gelangen, durch die dieselbe beschädigt wird. Ein solcher beschädigter Formkörper ist meistens unbrauchbar.

Der Erfindung liegt deshalb die Aufgabe zugrunde, einen Formkörper aus
Kunststoff zu schaffen, der ohne zusätzlichen Herstellungsaufwand eine elektronische Abschirmung besitzt und bei dessen Herstellung nicht die Gefahr
besteht, daß die äußere Oberfläche bzw. Sichtfläche beschädigt wird.

Zur Lösung dieser Aufgabe ist der Formkörper gemäß dem Kennzeichen des Anspruches 1 ausgebildet. Ein solcher Formkörper besitzt eine elektronische
Abschirmung bzw. einen induktiven Schutz. Dabei kann diese besondere Schicht
bei dünnwandigen Formkörpern der Dicke bzw. Wandstärke des Kernes entsprechen, während dieselbe bei dickwandigen Formkörpern nur den Kern umschließt.
Bei der Herstellung eines solchen Formkörpers wird unmittelbar nach dem
Einspritzen einer vorbestimmten Menge treibmittelfreien Kunststoffs in eine
Form der elektrisch leitende Füllstoff allein oder in homogener Vermischung
mit weiterem Kunststoff in die Form und zwar in das Innere der sich schon
im Formhohlraum befindlichen, treibmittelfreien Kunststoffmasse eingespritzt,
die dadurch an der Wandung des Formhohlraumes zum Anliegen kommt.

Die Erfindung wird nachfolgend anhand eines in einer Zeichnung dargestellten
Ausführungsbeispieles näher erläutert. Dabei zeigen

Fig. 1 eine vereinfachte Vorrichtung zur Herstellung eines Formkörpers gemäß
        der Erfindung und

Fig. 2 bis 4 verschiedene Stellungen der Schließnadel der in Fig. 1 gezeigten
        Vorrichtung.

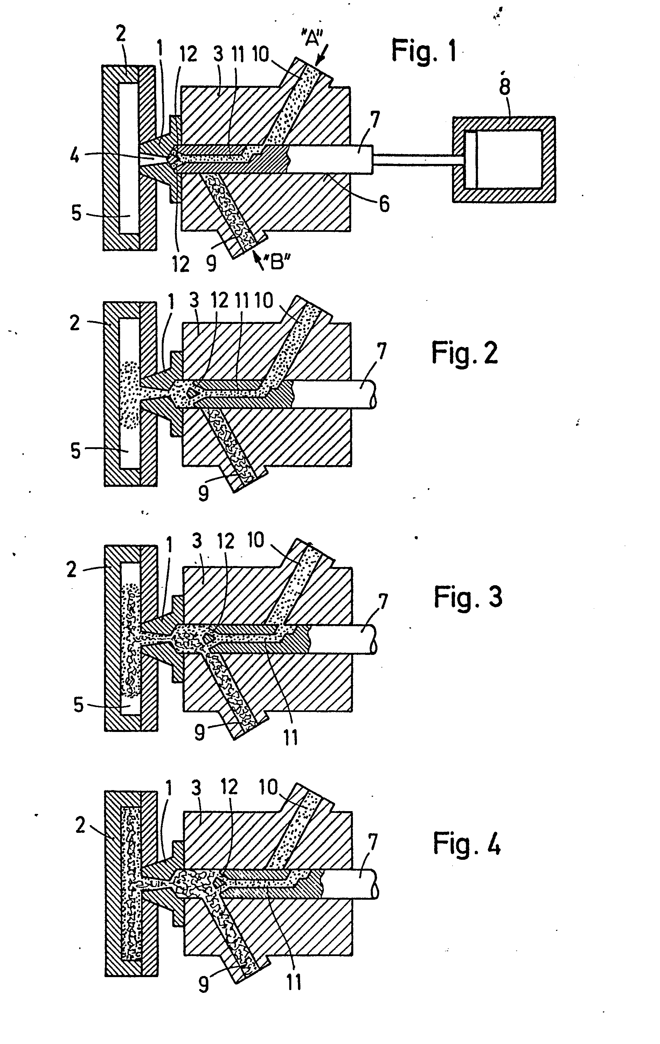

In der Fig. 1 der Zeichnung ist eine Vorrichtung zum Herstellen eines Formkörpers aus Kunststoff mit einem von einer kompakten Außenhaut aus treibmittelfreiem Kunststoff umschlossenen Kern dargestellt, die aus einem über
ein Mundstück 1 an eine Form 2 angeschlossenen Spritzkopf 3 besteht. Das
Mundstück 1 ist fest an den Spritzkopf 3 angeschlossen und weist eine Ausspritzöffnung 4 auf, die in den vereinfacht gezeichneten Formhohlraum 5 der
Form 2 mündet. Von dem Mundstück 1 erstreckt sich eine axiale Bohrung 6, Der Schließnadel 7 ist ein beispielsweise hydraulisch beaufschlagbarer Verschiebeantrieb 8 zugeordnet, über den die Schließnadel in ihre einzelnen Stellungen gemäß den Fig. 1 bis 4 bewegt bzw. verschoben werden kann.

Mit Abstand von dem Mundstück 1 mündet unter einem Winkel von etwa 45° ein Zuführkanal 9 in die Bohrung 6, der mit einer an sich bekannten, nicht dargestellten Spritzeinheit, beispielsweise einem Extruder, verbunden ist. Über den Zuführkanal 9 kann bspw. treibmittelhaltiger Kunststoff "B" in die Bohrung 6 und von ihr über das Mundstück 1 in die Form eingespritzt werden. Mit Abstand von diesem Zuführkanal 9 mündet ein weiterer Zuführkanal 10 in die Bohrung 6, der ebenfalls mit einer Spritzeinheit, beispielsweise einem Extruder, verbunden ist. Über den Zuführkanal 10 kann treibmittelfreier Kunststoff "A" in die Bohrung 6 und von hier über das Mundstück 1 in die Form 2 eingespritzt werden.

In die Schließnadel 7 ist ein Kanal 11 eingearbeitet, der sich von dem freien, dem Mundstück 1 zugewandten Ende, der Schließnadel 7 in der Stellung der Schließnadel 7 gemäß Fig. 1 bis in den Bereich des Zuführkanales 10 erstreckt, diesen jedoch nicht ganz überdeckt. Der Kanal 11 weist in diesem Ausführungsbeispiel mindestens zwei Öffnungen 12 auf, die in der in Fig. 1 gezeichneten Stellung der Schließnadel 7 durch das Mundstück 1 verschlossen sind.

Bei der Erläuterung der Arbeitsweise der Vorrichtung wird nun davon ausgegangen, daß der Zuführkanal 10 mit unter Druck stehendem, treibmittelfreiem Kunststoff "A" gefüllt ist, wobei sich dieser Kunststoff infolge der geringfügigen Überdeckung gemäß Fig. 1 auch im Kanal 11 befindet. Der Zuführkanal 9 ist mit unter Druck stehendem, treibmittelhaltigem Kunststoff "B" gefüllt, der im vorliegenden Ausführungsbeispiel mit etwa 50 Gewichtsprozent Eisenpulver homogen vermischt ist.

Über den Verschiebeantrieb 8 wird nun die Schließnadel 7 aus der Stellung der Fig. 1 in die Stellung gemäß Fig. 2 bewegt. In dieser Stellung der Schließnadel 7 ist der Kanal 11 mit vollem Strömungsquerschnitt an dem Zuführkanal 10 angeschlossen und die Öffnungen 12 des Kanals 11 sind frei, so daß treibmittelfreier Kunststoff "A" über die Bohrung 6 und die Ausspritzöffnung 4 des Mundstückes 1 in den Formhohlraum 5 eingespritzt werden kann. Sobald

0106208

sich eine vorbestimmte Menge treibmittelfreien Kunststoffes "A" im Formhohlraum 5 befindet, wird die Schließnadel in ihre Stellung gemäß Fig. 3
bewegt. In dieser Stellung ist der Zuführkanal 10 noch geringfügig vom
Kanal 11 überdeckt, so daß noch weiterhin eine geringe Menge treibmittelfreier Kunststoff "A" in die Bohrung 6 strömt. Gleichzeitig ist der Zuführkanal 9 für den mit Eisenpulver vermischten, treibmittelhaltigen Kunststoff "B" teilweise freigegeben, so daß nun auch dieser Kunststoff "B" in
die Bohrung 6 einströmt. Der treibmittelhaltige Kunststoff "B" weist eine
höhere Viskosität als der treibmittelfreie Kunststoff "A" auf. Diese hat
zur Folge, daß der treibmittelhaltige Kunststoff "B" in den in der Bohrung
6 befindlichen treibmittelfreien Kunststoff "A" strömt und mit diesem zusammen in den Formhohlraum 5 eingespritzt wird.

Nach einer vorgegebenen Zeit, in der beide Kunststoffe "A" und "B" gemeinsam
in den Formhohlraum 5 eingespritzt wurden, wird die Schließnadel 7 in
die Stellung gemäß Fig. 4 bewegt. In dieser Stellung der Schließnadel 7 ist
der Zuführkanal 10 vollkommen geschlossen, während der Zuführkanal 9 vollständig geöffnet ist. Über diesen Zuführkanal 9 strömt nur noch mit Eisenpulver vermischter, treibmittelhaltiger Kunststoff "B" über die Bohrung 6
und die Ausspritzöffnung 4 in den Formhohlraum 5, indem er ebenfalls infolge
der höheren Viskosität in den treibmittelfreien Kunststoff "A" eindringt.
Von dem treibmittelhaltigen Kunststoff "B" wird der treibmittelfreie Kunststoff "A" unter Bildung einer geschlossenen Außenhaut an der Wandung des
Formhohlraumes 5 dadurch zum Anliegen gebracht, daß der treibmittelhaltige
Kunststoff "B" im Formhohlraum 5 aufschäumt. Sobald sich eine vorgegebene
Menge treibmittelhaltigen Kunststoffes "B" im Formhohlraum 5 befindet, kehrt
die Schließnadel 7 über die Stellungen der Fig. 3 und 2 in die Schließstellung gemäß Fig. 1 zurück. Dabei werden wieder über einen kurzen Zeitraum beide Kunststoffe "A" und "B" in den Formhohlraum 5 eingespritzt, während am Ende des Einspritzvorganges (Fig. 2) nur noch treibmittelfreie
Kunststoffmasse "A" in den Formhohlraum 5 gelangt. Dadurch wird der Angußzapfen des fertigen Formkörpers versiegelt, so daß derselbe im Bereich des
Angußzapfens eine geschlossene Außenhaut aus treibmittelfreiem Kunststoff
"A" besitzt.

Der in der Form 2 gebildete Formkörper weist somit einen Kern aus treibmittelhaltigem Kunststoff "B" auf, in den Eisenpulver eingebettet ist.
Nach der Aushärtung des Formkörpers wird die Form 2 geöffnet und der
fertige Formkörper entnommen. Jetzt ist die Form 2 für einen neuen Einspritzvorgang bereit.

Bei der Herstellung von verhältnismäßig dicken Formkörpern ist es unzweckmäßig, den gesamten Kern aus treibmittelhaltigem Kunststoff mit Eisenpulver herzustellen. Hier kann in vorteilhafter Weise über eine weitere
Spritzeinheit nachträglich noch treibmittelhaltiger Kunststoff ohne Eisenpulver in den Formhohlraum eingespritzt werden. An die Außenhaut aus
treibmittelfreiem Kunststoff schließt sich dann eine dünne Schicht aus
mit Eisenpulver vermischten, treibmittelhaltigem Kunststoff an, während
der größte Teil des Kerns nur aus treibmittelhaltigem Kunststoff, also
ohne Eisenpulver besteht. In Abänderung des erläuterten Ausführungsbeispieles ist es ferner möglich, den elektrisch leitenden Füllstoff, z.B.
Metallpulver, mit treibmittelfreiem Kunststoff zu vermischen. Hier müssen
dann getrennte Spritzeinheiten für treibmittelfreien Kunststoff ohne
elektrisch leitenden Füllstoff und treibmittelfreien Kunststoff mit
elektrisch leitendem Füllstoff und gegebenenfalls treibmittelhaltigem
Kunststoff vorgesehen werden.

PATENTANWÄLTE F.W. HEMMERICH · GERD MÜLLER · D. GROSSE · F. POLLMEIER

13. Oktober 1982                    ko.ni                    61 042

Battenfeld Maschinenfabriken GmbH, 5882 Meinerzhagen 1

Patentansprüche

1. Formkörper aus Kunststoff mit einem von einer kompakten Außenhaut aus treibmittelfreiem Kunststoff umschlossenen Kern,
   d a d u r c h   g e k e n n z e i c h n e t ,
   daß zumindest eine dünne, an die Außenhaut angrenzende Schicht
   daß zumindest eine dünne, an die Außenhaut angrenzende Schicht
   des Kernes zumindest teilweise aus elektrisch leitendem Füllstoff gebildet ist.

2. Formkörper aus Anspruch 1,
   d a d u r c h   g e k e n n z e i c h n e t ,
   daß der elektrisch leitende Füllstoff homogen verteilt in eine an die Außenhaut angrenzende Schicht aus Kunststoff eingebettet ist.

3. Formkörper nach Anspruch 2,
   d a d u r c h   g e k e n n z e i c h n e t ,
   daß die den elektrisch leitenden Füllstoff aufnehmende Schicht aus treibmittelfreiem Kunststoff gebildet ist.

4. Formkörper nach Anspruch 2,
   d a d u r c h   g e k e n n z e i c h n e t ,
   daß die den elektrisch leitenden Füllstoff aufnehmende Schicht aus treibmittelhaltigem Kunststoff gebildet ist.

5. Formkörper nach mindestens einem der Ansprüche 1 bis 4,
   d a d u r c h   g e k e n n z e i c h n e t ,
   daß der von der den elektrisch leitenden Füllstoff aufnehmende Schicht umschlossene Kern aus treibmittelhaltigem Kunststoff gebildet ist.

6. Formkörper nach mindestens einem der Ansprüche 1 bis 5,

   d a d u r c h   g e k e n n z e i c h n e t ,

   daß der elektrisch leitende Füllstoff aus Metallpulver gebildet ist.

7. Formkörper nach Anspruch 6,

   d a d u r c h   g e k e n n z e i c h n e t ,

   daß die den elektrisch leitenden Füllstoff aufnehmende Schicht mindestens 50 Gewichtsprozent Metallpulver enthält.

8. Formkörper nach einem der Ansprüche 6 oder 7,

   d a d u r c h   g e k e n n z e i c h n e t ,

   daß die metallpulverhaltige Schicht aus Eisen- oder Aluminiumpulver gebildet ist.

9. Verfahren zur Herstellung eines Kunststoff-Formkörpers mit einem von einer kompakten Außenhaut aus treibmittelfreiem Kunststoff umschlossenem Kern, insbesondere nach Anspruch 1, bei dem zuerst zumindest ein Teil des treibmittelfreien Kunststoffes in den Formhohlraum einer Form und anschließend in das Innere dieses Kunststoffes die Kernmasse eingespritzt wird, wobei der treibmittelfreie Kunststoff von der Kernmasse an der Wandung des Formhohlraumes zum Anliegen gebracht wird,

   d a d u r c h   g e k e n n z e i c h n e t ,

   daß als Kernmasse zumindest teilweise elektrisch leitender Füllstoff eingespritzt wird.

10. Verfahren nach Anspruch 8,

   d a d u r c h   g e k e n n z e i c h n e t ,

   daß der elektrisch leitende Füllstoff zusammen mit treibmittelfreien oder treibmittelhaltigen, den Kern bildenden Kunststoff eingespritzt wird.

0106208

1/1

Fig. 1

Fig. 2

Fig. 3

Fig. 4